# EUROPEAN PATENT SPECIFICATION

(11) **EP 4 375 037 B1**
(45) Date of publication and mention of the grant of the patent: **01.10.2025**
(21) Application number: 22845683.6
(22) Date of filing: 20.05.2022
(51) Int. Cl.: B29C 70/50, B29B 11/16, D04H 1/4242, D04H 1/736

(54) **METHOD FOR PRODUCING SHEET MOLDING COMPOUND, DISPERSION ROLLER DEVICE, AND APPARATUS FOR PRODUCING SHEET MOLDING COMPOUND**
VERFAHREN ZUR HERSTELLUNG EINER BAHNENFORMMASSE, DISPERSIONSROLLENVORRICHTUNG UND VORRICHTUNG ZUR HERSTELLUNG EINER BAHNENFORMMASSE
PROCÉDÉ DE PRODUCTION D'UN MÉLANGE À MOULER EN FEUILLE, DISPOSITIF À ROULEAU DE DISPERSION ET APPAREIL DE PRODUCTION D'UN MÉLANGE À MOULER EN FEUILLE

(30) Priority: 19.07.2021 JP 2021118818; 25.03.2022 JP 2022050649
(43) Date of publication of application: 29.05.2024
(60) Divisional application: 25150909.7
(73) Proprietor: Mitsubishi Chemical Corporation, Chiyoda-ku Tokyo 100-8251 (JP)
(72) Inventor: ODA Kentaro, Tokyo 100-8251 (JP); WATANABE Yasushi, Tokyo 100-8251 (JP); SAMEJIMA Tadao, Tokyo 100-8251 (JP); MIZUTORI Yukihiro, Tokyo 100-8251 (JP)
(74) Representative: Hoffmann Eitle
(86) International application number: PCT/JP2022/021029
(87) International publication number: WO 2023/002746

(56) References cited:
- EP-A1- 3 741 895
- WO-A1-2019/142851
- CN-U- 212 955 473
- JP-A- 2000 017 557

## Description

### [Technical Field]

The present invention mainly relates to a manufacturing method of a sheet molding compound (SMC).

The present invention also relates to a dispersion roller device suitably used for manufacturing an SMC, and an SMC manufacturing apparatus as well as its use comprising the same.

### [Background Art]

Carbon fiber reinforced plastic (CFRP) is a lightweight composite material with excellent mechanical properties, which is suitable for parts of manned aircraft, unmanned aircraft, automobiles, ships, railway vehicles, and other transportation equipment, and its importance has been increasing in recent years.

An intermediate material referred to as "prepreg" is preferably used when manufacturing CFRP products by compression molding. Prepregs for CFRP products are produced by impregnating a carbon fiber reinforcement with an uncured thermosetting resin composition.

CF-SMC is one type of prepreg, and its manufacturing process involves cutting a continuous carbon fiber bundle with a chopper into short carbon fiber bundles, which are then allowed to fall onto a carrier film travelling with its surface oriented approximately horizontal, to thereby form a carbon fiber mat. CF-SMC is manufactured by impregnating this carbon fiber mat with a thermosetting resin composition.

As regards manufacturing of CF-SMC, it has been proposed to provide a dispersion roll below a chopper in order to disperse short carbon fiber bundles that are let to fall onto a carrier film (Patent Literatures 1 and 2).

### [Citation List]

### [Patent Literature]

Patent Literature 1 : International Patent Application Publication No. WO 2019/142851
Patent Literature 2: International Patent Application Publication No. WO 2021/010084
Patent Literature 3: JP 2000 017557 A

Patent literature 3 discloses a dispersion roller device used for dispersing short fibre bundles allowed to fall onto a carrier film in production of a sheet moulding compound, comprising a rotational drive dispersion roll with end plates wherein the roll body has a rotational symmetry around its rotation axis.

### [Summary of Invention]

### [Technical Problem]

The present invention relates to an SMC manufacturing technology that uses a dispersion roll to disperse short fiber bundles that are allowed to fall onto a carrier film, and its primary purpose is to provide an improvement that is advantageous in achieving at least one of the following: preventing contamination of the SMC manufacturing line, maintaining the cleanliness of mechanical elements included in the SMC manufacturing apparatus, preventing failure of control equipment installed in or around the SMC manufacturing apparatus, and preventing deterioration of the working environment.

In the present specification, problems that can be solved by each embodiment of the present invention may be explicitly or implicitly disclosed.

### [Solution to Problem]

The present invention in its one embodiment provides a manufacturing method of a sheet molding compound, as defined in claim 14.

The present invention in its still another embodiment provides a dispersion roller device used for dispersing short fiber bundles allowed to fall onto a carrier film in production of a sheet molding compound as defined in claim 1 as well as the use of this device as defined in claim 8.

### [Advantageous Effects of Invention]

There is provided an improvement advantageous in achieving at least one of the following: preventing contamination of the SMC manufacturing line, maintaining the cleanliness of mechanical elements included in the SMC manufacturing apparatus, preventing failure of control equipment installed in or around the SMC manufacturing apparatus, and preventing deterioration of the working environment.

### [Brief Description of Drawings]

FIG. 1 is a schematic diagram of an SMC manufacturing apparatus.
FIG. 2 is a schematic diagram of a dispersion roller device.
FIG. 3 is a schematic diagram of a dispersion roll.
FIG. 4 shows an example of pin arrangement on the circumferential surface of a roll body of a dispersion roll.
FIG. 5 shows an example of pin arrangement on the circumferential surface of a roll body of a dispersion roll.
FIG. 6 shows an example of pin arrangement on the circumferential surface of a roll body of a dispersion roll.
FIG. 7 is a schematic diagram of a dispersion roll.
FIG. 8 is a schematic diagram of a dispersion roller device.
FIG. 9 is a schematic diagram for explaining one of the functions of a side cover.
FIG. 10 is a schematic diagram showing a part of a dispersion roller device.
FIG. 11 is a schematic diagram of a dispersion roller device.
FIG. 12 is a schematic diagram showing a positional relationship between two roll bodies in one embodiment of a dispersion roller device.
FIG. 13 is a schematic diagram for explaining one of the functions of a regulator plate.
FIG. 14 is a schematic diagram of a cage roll-type roll body in one embodiment of a dispersion roller device.
FIG. 15 is a schematic diagram showing a roll body of a dispersion roll as viewed from the axial direction thereof.

### [Description of Embodiments]

### 1. Sheet Molding Compound Manufacturing Apparatus

### 1.1. Overview of Apparatus

One embodiment of the present invention relates to a sheet molding compound (SMC) manufacturing apparatus that can be preferably used in a method of manufacturing an SMC comprising the following (i) and (ii), particularly in a method of manufacturing a CF-SMC:
(i) allowing short fiber bundles to fall onto a carrier film travelling with its surface oriented approximately horizontally, while dispersing the short fiber bundles using a dispersion roll, to thereby deposit a fiber mat on the carrier film; and
(ii) impregnating the fiber mat with a thermosetting resin composition.

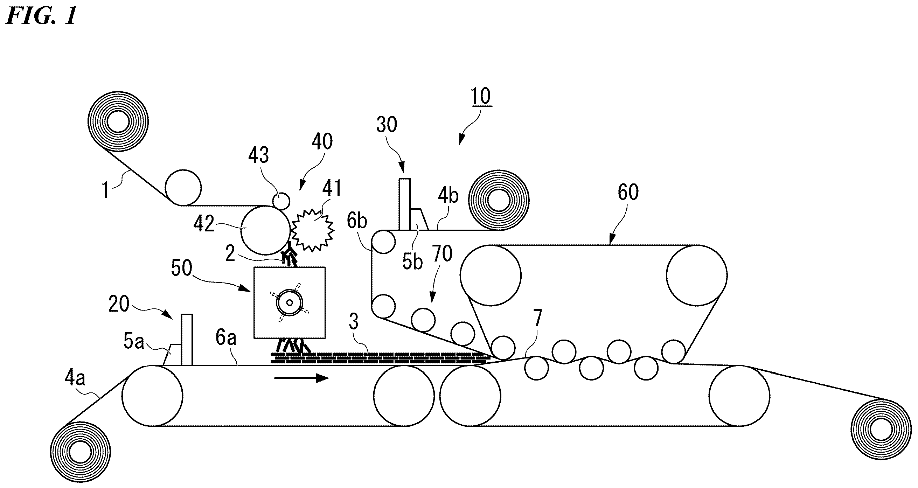

FIG. 1 shows a conceptual diagram of an SMC manufacturing apparatus according to one embodiment.

Referring to FIG. 1, the SMC manufacturing apparatus 10 includes a first applicator 20, a second applicator 30, a chopper 40, a dispersion roller device 50, and an impregnator 60.

The first applicator 20 is used to apply a first resin paste 5a to a first carrier film 4a to form a first resin paste layer 6a.

The second applicator 30 is used to apply a second resin paste 5b to a second carrier film 4b to form a second resin paste layer 6b.

The chopper 40 is disposed above the conveyance path for the first carrier film 4a and is used to cut the continuous fiber bundle 1 into short fiber bundles 2.

Below the chopper 40, the surface of the first carrier film 4a on the conveyance path is held substantially horizontally. This is to prevent the fallen short fiber bundles 2 and the deposited fiber mat 3 from moving due to gravity on the surface of the first carrier film 4a.

The chopper 40 is of a type that is also used in conventional SMC manufacturing apparatuses, and has a cutter roll 41, a receiving roll (rubber roll) 42, and a guide roll 43.

The rotation axes of the cutter roll 41, the receiving roll 42, and the guide roll 43 are all parallel to the T direction.

The T direction is a direction that is horizontal and perpendicular to the M direction. The M direction is the travelling direction of the first carrier film 4a.

The T direction is perpendicular to the paper surface in FIG. 1.

The dispersion roller device 50 is disposed below the chopper 40 in order to disperse the short fiber bundles 2 falling onto the first carrier film 4a.

A laminator 70 for laminating the first carrier film 4a and the second carrier film 4b is disposed upstream of the impregnator 60.

The laminator 70 laminates the first carrier film 4a and the second carrier film 4b together to form a stack 7. In the stack 7, a first resin paste layer 6a, a fiber mat 3, and a second resin paste layer 6b are sandwiched between the first carrier film 4a and the second carrier film 4b. The impregnator 60 is of a type used in conventional SMC manufacturing apparatuses, and has two belt conveyors (upper and lower belt conveyors) for conveying the stack 7 sandwiched between two conveyor belts, and rolls for pinching and pressurizing the stack 7 together with the conveyor belts.

### 1.2. Dispersion Roller Device

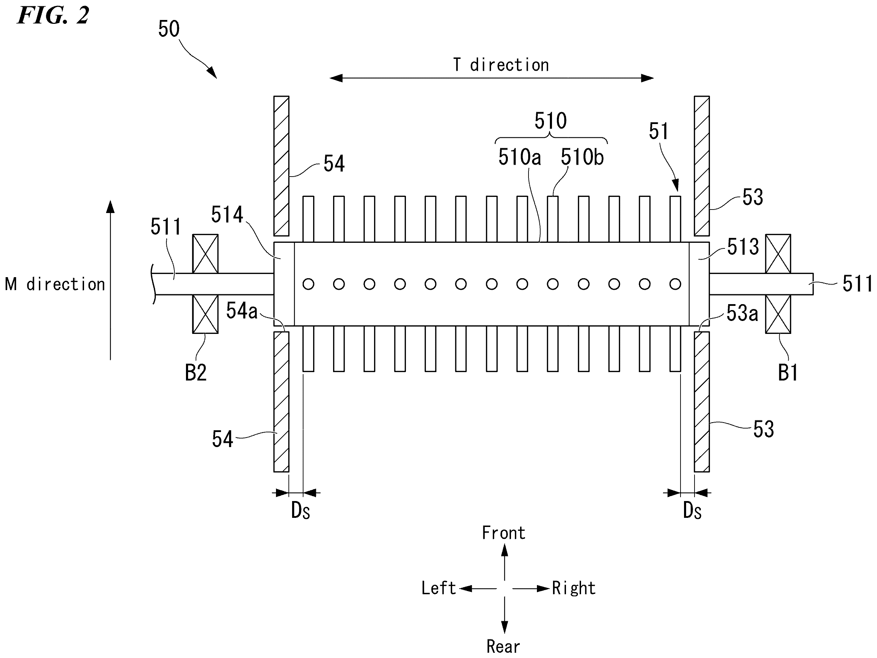

FIG. 2 is a cut diagram of the dispersion roller device 50 included in the SMC manufacturing apparatus 10 as viewed from above. The dispersion roller device 50 has a dispersion roll 51 supported by a pair of bearings B1 and B2, a side cover (right) 53, and a side cover (left) 54.

Both the side cover (right) 53 and the side cover (left) 54 are disposed between the bearing B1 and the bearing B2. Therefore, the side covers and the bearings are not integrated.

FIG. 2 omits depiction of a mechanism for rotationally driving the dispersion roll 51, such as an electric motor and a power transmission system (the same applies to other drawings).

In the present specification, as shown in FIG. 2, the front, rear, left, and right of the dispersion roller device 50 are defined on the premise that the first carrier film 4a travels forward from the back below the dispersion roller device 50, and a person facing forward has their right hand on the right and their left hand on the left.

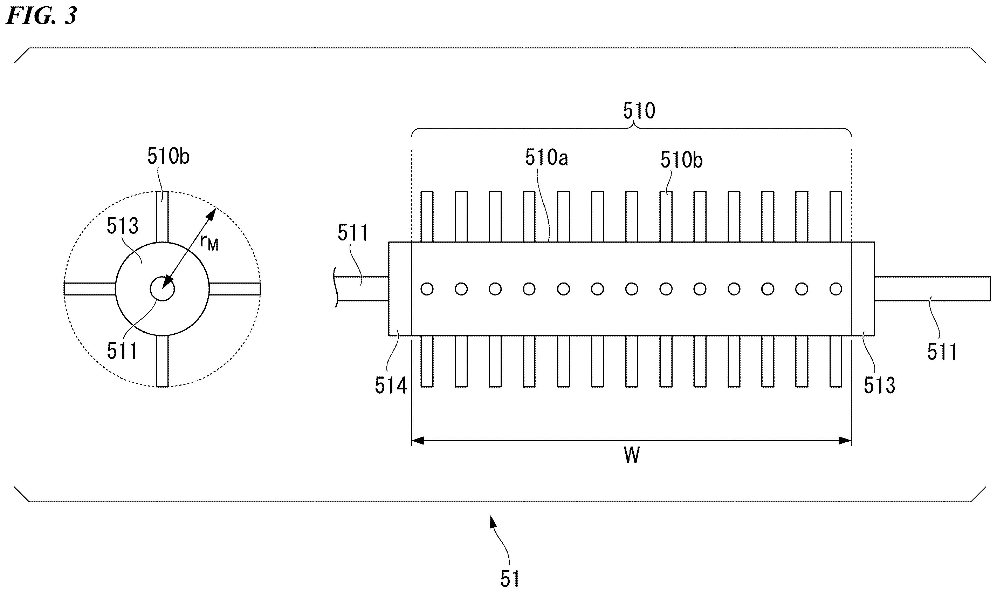

As shown in FIG. 3, the dispersion roll 51 has a roll body 510, a roll body-adjoining part (right) 513 and a roll body-adjoining part (left) 514 which respectively adjoin one end (right end) and the other end (left end) of the roll body 510 in its axial direction, and a shaft 511 penetrating through the roll body and the right and left roll body-adjoining parts in their axial directions.

The roll body 510 is of a pin roll type and has a cylinder 510a and a plurality of pins 510b arranged on the circumferential surface of the cylinder 510a.

Both the roll body 510 and the shaft 511 of the dispersion roll 51 have high rigidity and are formed of a metal material such as stainless steel.

The pins 510b move in the circumferential direction when the dispersion roll 51 is rotated, which allows the short fiber bundles 2 to be hit by the side surfaces of the pins 510b.

Both the roll body-adjoining part (right) 513 and the roll body-adjoining part (left) 514 have cylindrical circumferential surfaces. The material of the roll body-adjoining parts may be different from or the same as that of the cylinder 510a. When the material of the roll body-adjoining parts is different from that of the cylinder, the material of the roll body-adjoining parts may be a metal (including alloys; the same shall apply hereinafter), or the roll body-adjoining parts may be formed entirely or partially of a resin. When the roll body-adjoining parts and the cylinder are formed of the same material, the roll body-adjoining parts 513, 514 may be formed integrally with the cylinder 510a.

The diameter of the cylindrical circumferential surface of the roll body-adjoining parts 513, 514 is larger than the diameter of the shaft 511, and may be the same as or different from the diameter of the cylinder 510a. Preferably, the diameter of the cylindrical circumferential surface of the roll body-adjoining parts 513, 514 is equal to or larger than the diameter of the cylinder 510a. In one example, the radius of the roll body-adjoining parts 513, 514 may be equal to or greater than the maximum radius r_{M} of the roll body 510. The maximum radius r_{M} of the roll body 510 is the radius of a cylinder whose central axis coincides with the rotation axis of the roll body 510 and which circumscribes the roll body 510. In the case of a pin roll type, the maximum radius of the roll body is equal to the distance from the rotation axis to the tip of the longest pin.

The diameter of the roll body-adjoining parts 513, 514 may be significantly smaller than the diameter of the cylinder 510a, which, however, may pose a disadvantage that the gap formed between the cylinder 510a and the side covers 53, 54 is easily contaminated with fiber dust, and is not easily cleanable.

A preferred embodiment of the pin roll type roll body 510 is as follows.

The diameter of the cylinder 510 a is, for example, but not limited to, 30 mm to 300 mm, and may be 60 mm to 150 mm. A larger diameter of the cylinder 510a allows the whole pin 510b to move at a higher circumferential speed when the dispersion roll 51 is rotated, resulting in higher ability to disperse the short fiber bundles 2.

The pin 510b extends perpendicularly to the rotation axis (central axis) of the dispersion roll 51, and may have, for example, but without limitation, a cylindrical shape. The boundary between the end surface and the circumferential surface of the pin 510b may be chamfered.

The diameter of the pin 510b is, for example, but not limited to, 1 mm to 15 mm, and may be 10 mm or less, preferably 5 mm or less.

The length of the pin 510b, that is, the distance from the tip to the base of the pin, is, for example, but not limited to, 10 mm to 150 mm, and may be 10 mm to 100 mm, or may be 10 mm to 50 mm.

Preferably, all of the pins 510b have the same shape and dimensions as each other.

The arrangement of pins 510b on the circumferential surface of cylinder 510a is periodic. When the arrangement of the pins 510b is shifted, for example, in the axial direction of the cylinder by 5 mm or more and less than 20 mm, 20 mm or more and less than 40 mm, or 40 mm or more and 60 mm or less, and also when it is shifted in the circumferential direction of the cylinder by, for example, 10°, 15°, 18°, 20°, 22.5°, 30°, 45°, 60°, 90°, 120° or 180°, it may overlap with the original arrangement. In the example of FIG. 3, when the arrangement of the pins 510b is shifted by 90° in the circumferential direction of the cylinder, it overlaps with the original arrangement; that is, the roll body 510 has 4-fold rotational symmetry around its rotation axis. For example, when shifting the arrangement of the pins 510b by 22.5° in the circumferential direction causes it to overlap with the original arrangement, the roll body has 16-fold rotational symmetry around its rotation axis.

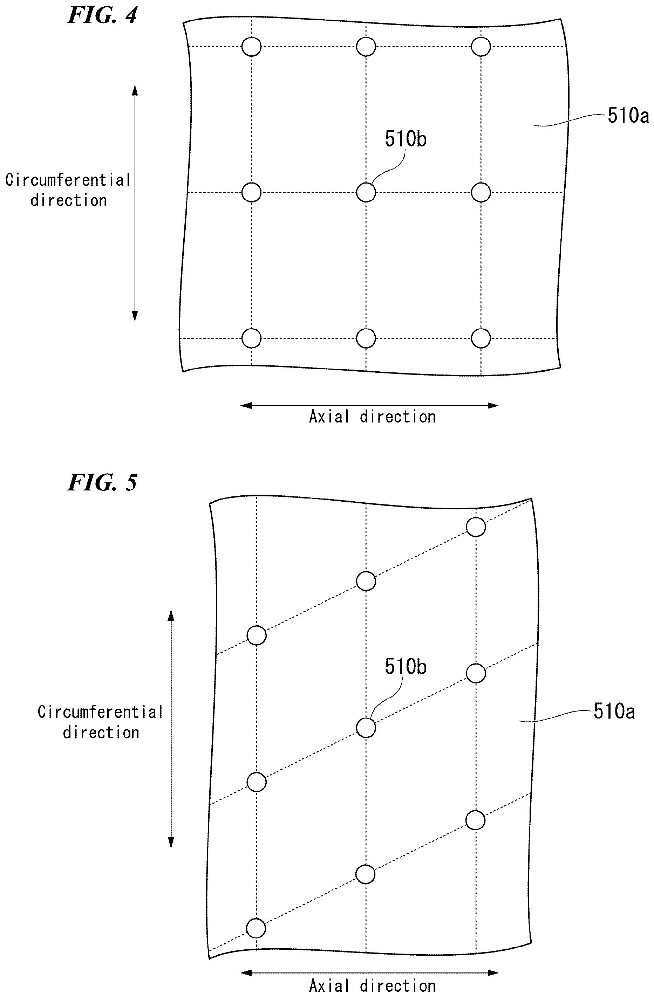

In the dispersion roll 51 shown in FIG. 3, when the circumferential surface of the cylinder 510a is developed in a plane, the pins 510b are disposed, as shown in FIG. 4, at grid positions of quadrilateral grids (indicated by broken lines) composed of grid lines parallel to the axial direction and grid lines parallel to the circumferential direction.

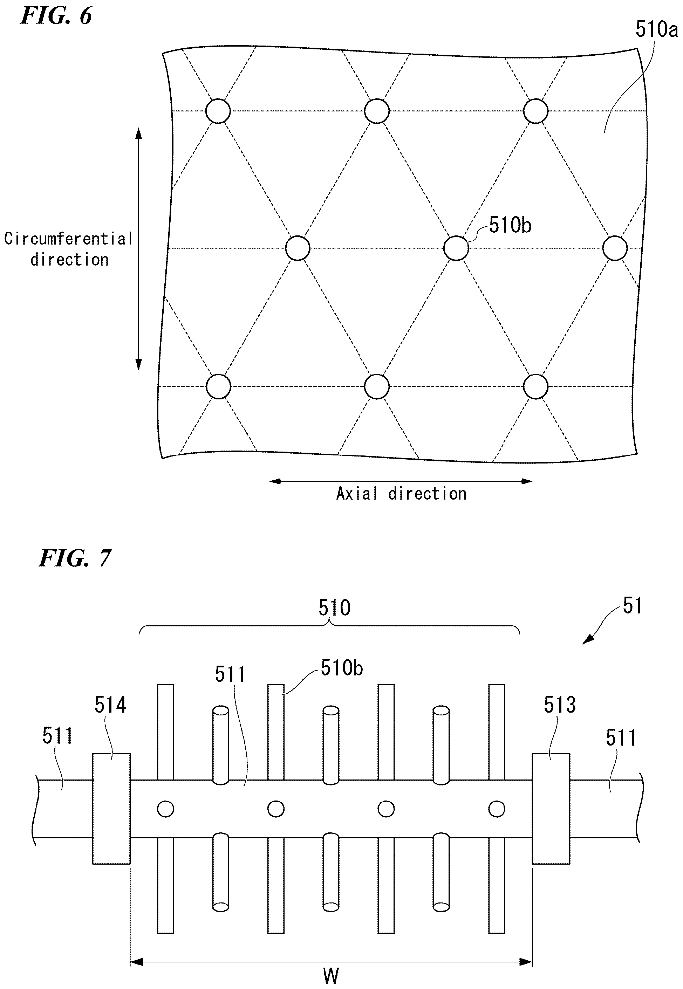

In another typical example, as shown in FIG. 5, the pins 510b may be disposed at grid positions of inclined quadrilateral grids (indicated by broken lines) composed of grid lines inclined relative to the axial direction and grid lines parallel to the circumferential direction. Alternatively, as shown in FIG. 6, the pin 510b may be disposed at each vertex of tessellating equilateral triangles (indicated by broken lines) each with one side being parallel to the axial direction.

In one example, as shown in FIG. 7, the shaft 511 may also serve as a cylinder. However, this embodiment is disadvantageous in that, when the dispersion roll 51 is rotated so that the circumferential speed at the tip of the pin 510b is optimal, fiber dust is likely to deposit on places with a low circumferential speed, such as the surface of the shaft 511, and the base of the pin 510b and its vicinity.

The side cover (right) 53 and the side cover (left) 54 are preferably, but not limited to be, formed of metal plates. When a metal plate is used, its thickness is, for example, 3 mm to 5 mm, and may be larger or smaller than this range depending on the required rigidity and strength.

On both the right and left sides, the horizontal distance D_{S} from the side cover 53, 54 to the pin 510b which is closest to the side cover in terms of horizontal distance is 60 mm or less, 50 mm or less, 40 mm or less, 30 mm or less, 20 mm or less, or 10 mm or less.

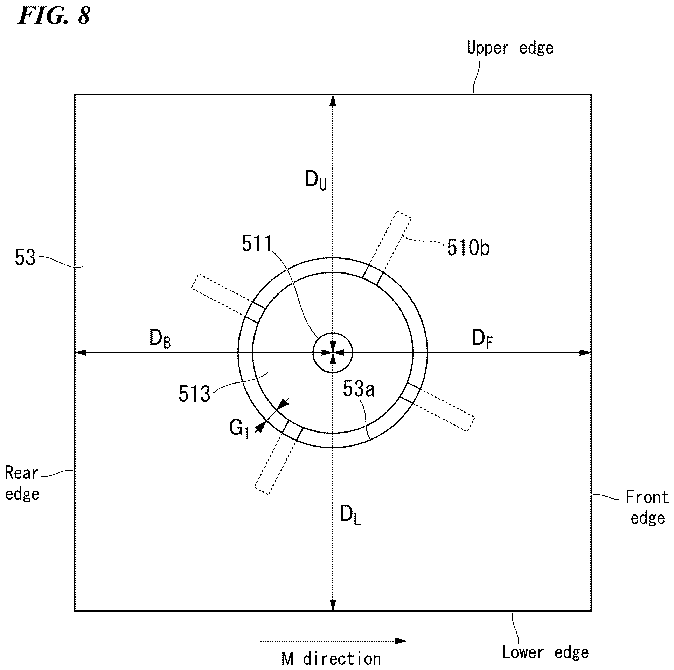

As shown in FIG. 8, the side cover (right) 53 is provided with a circular opening (right) 53a, and as shown in FIG. 2, the inner circumferential surface of this circular opening (right) 53a faces the cylindrical circumferential surface of the roll body-adjoining part (right) 513 located immediately to the right of the roll body 510. Similarly, the side cover (left) 54 is provided with a circular opening (left) 54a, and the inner circumferential surface of the circular opening (left) 54a faces the cylindrical circumferential surface of the roll body-adjoining part (left) 514 located immediately to the left of the roll body 510.

By adopting such a configuration, the short fiber bundles 2 and the fiber dust generated by dispersing the short fiber bundles 2 with the dispersion roll 51 become less likely to leak to the outside of the side covers 53 and 54. This is advantageous in achieving at least one of the following: preventing contamination of the SMC manufacturing line, maintaining the cleanliness of mechanical elements included in the SMC manufacturing apparatus, preventing failure of control equipment installed in or around the SMC manufacturing apparatus, and preventing deterioration of the working environment.

It would be obvious to those skilled in the art that this effect becomes higher as the following gaps decrease: gap G₁ between the inner circumferential surface of the circular opening (right) 53a of the side cover (right) 53 and the cylindrical circumferential surface of the roll body-adjoining part (right) 513, and gap G₂ between the inner circumferential surface of the circular opening (left) 54a of the side cover (left) 54 and the cylindrical circumferential surface of the roll body-adjoining part (left) 514.

The gaps G₁ and G₂ are each, for example, 10 mm or less, preferably 5 mm or less, more preferably 3 mm or less, even more preferably 1 mm or less, and may be 0.5 mm or less. The gaps G₁ and G₂ are usually smaller than the length of the pin 510b and are preferably 1/2 or less thereof, more preferably 1/5 or less thereof, even more preferably 1/10 or less thereof (provided that the length of the pin 510b in this context is that of the longest pin when not all the pins have the same length).

The benefit obtained by suppressing the leakage of fiber dust to the outside of the side cover is particularly large when the short fiber bundle 2 comprises carbon fiber. This is because the carbon fiber generally has a small filament diameter of less than 10 µm, and therefore generates fine, floatable fiber dust. Another reason is that fiber dust generated from the carbon fiber is electrically conductive, and therefore can impede the operation of electrical and electronic equipment.

The gaps can be reduced to about 0.2 mm by using a metal for one of materials of the inner circumferential surface of the circular opening 53a, 54a and the cylindrical circumferential surface of the roll body-adjoining part 513, 514, while using a resin for the other.

A preferred example of the resin mentioned here is a resin generally used as a material for slide bearings, such as a polytetrafluoroethylene resin (PTFE), polyacetal, nylon, polyethylene, a phenol resin, polyimide, polyphenylene sulfide, polyetheretherketone, and polyamideimide.

The side cover 53 may be assembled from a plurality of parts, and the same applies to the side cover 54.

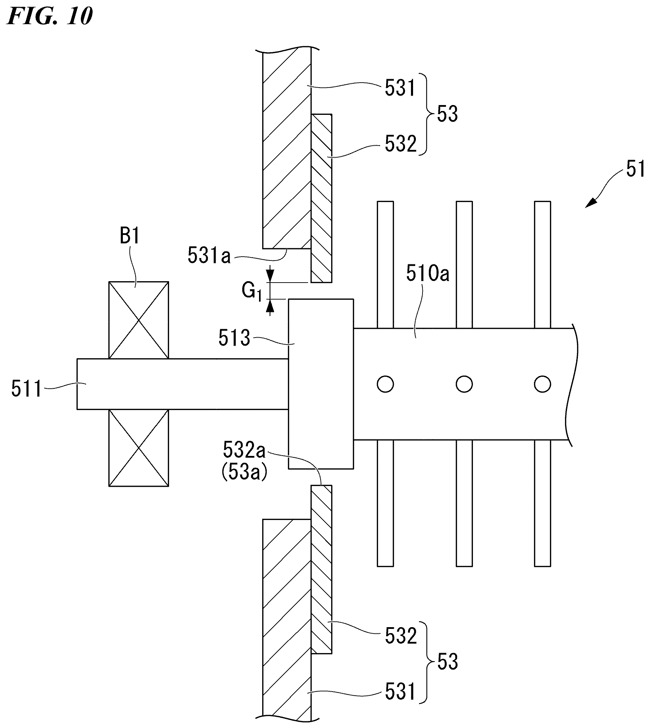

In the example shown in FIG. 10, the side cover 53 is composed of a cover main body 531 and a ring 532, where the ring 532 having a hole 532a smaller in diameter than the main body opening 531a is fixed at the position of the main body opening 531a provided in the cover main body 531. In such an instance, the hole 532a of the ring 532 corresponds to the circular opening 53a provided in the side cover 53, and the cylindrical circumferential surface of the roll body-adjoining part (right) 513 faces the inner circumferential surface of the hole 532a of the ring 532.

In one example, when preparing the dispersion roller device 50, the roll body-adjoining part (right) 513 is first inserted into the hole 532a of the ring 532, and then the ring 532 is fixed to the cover main body 531. During this fixing process, the position of the ring 532 is adjusted so that the inner circumferential surface of the hole 532a and the roll body-adjoining part (right) 513 do not come into contact with each other. In order to enable such adjustment, the position of the ring 532 when fixed to the cover main body 531 is variable within a plane perpendicular to the rotation axis of the dispersion roll 51. This measure is particularly advantageous when preparing the dispersion roller device 50 in which the gap G₁ between the cylindrical circumferential surface of the roll body-adjoining part 513 and the hole 532a of the ring 532 is small.

The cover main body 531 is preferably a metal plate. The material of the ring 532 may be the same as or different from that of the cover main body 531.

When the material of the ring 532 is resin, it is preferable that at least the cylindrical circumferential surface of the roll body-adjoining part 513 is formed of a metal.

When the material of the ring 532 is a metal, it is preferable that at least the cylindrical circumferential surface of the roll body-adjoining part 513 is formed of a resin.

The roll body-adjoining part 513 may be composed of two or more parts, and for example, a portion including the cylindrical circumferential surface and the other portions may be formed of different materials.

The descriptions presented above with reference to FIG. 10 are applicable to the side cover (left) 54 and the roll body-adjoining part (left) 514 in exactly the same manner.

In order to allow the side cover 53 to work more effectively, it is preferable that the vertical distance D_{U} from the rotation axis of the dispersion roll 51 to the upper edge of the side cover 53 is larger than the maximum radius r_{M} of the roll body 510 in the dispersion roll 51 (see FIG. 8). Similarly, it is preferable that the vertical distance D_{L} from the rotation axis of the dispersion roll 51 to the lower edge of the side cover 53, the horizontal distance D_{F} from the rotation axis of the dispersion roll 51 to the front edge of the side cover 53, and the horizontal distance D_{B} from the rotation axis of the dispersion roll 51 to the rear edge of the side cover 53 are each larger than the maximum radius r_{M} of the roll body 510. The same applies to the side cover 54, and it is preferable that the vertical distances from the rotation axis of the dispersion roll 51 to the upper and lower edges of the side cover 54 and the horizontal distances from the rotation axis of the dispersion roll 51 to the front and rear edges of the side cover 54 are each larger than the maximum radius r_{M} of the roll body 510.

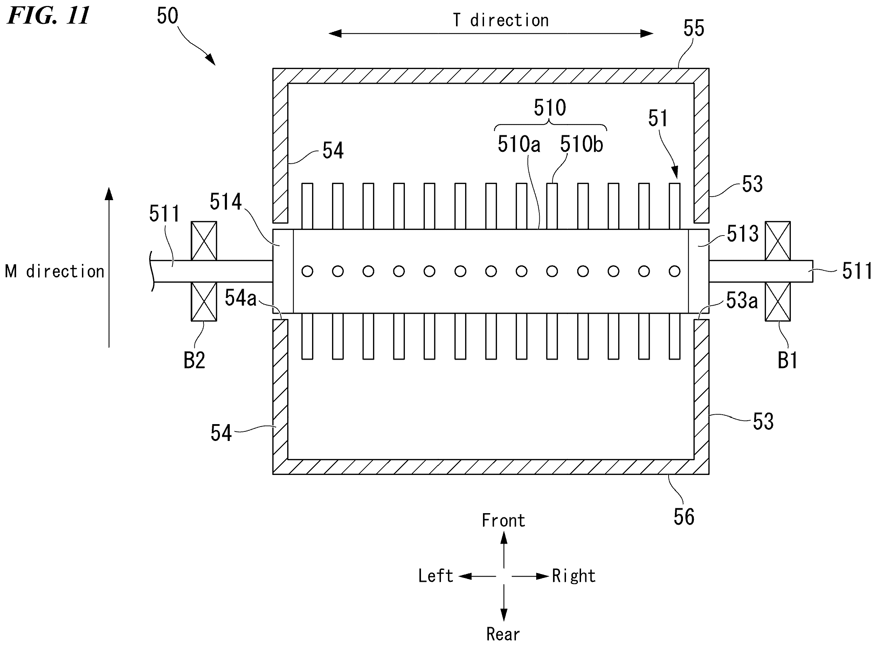

As shown in FIG. 11, in one example, a front cover 55 may be disposed in front of the roll body 510 of the dispersion roll 51, while disposing a rear cover 56 behind the roll body 510 of the dispersion roll 51. In the example of FIG. 11, two side covers 53, 54, a front cover 55, and a rear cover 56 are integrated to form an enclosure surrounding the roll body 510.

A seam may be present between the side covers 53, 54 and the front cover 55, and the same applies to the border between the side covers 53, 54 and the rear cover 56.

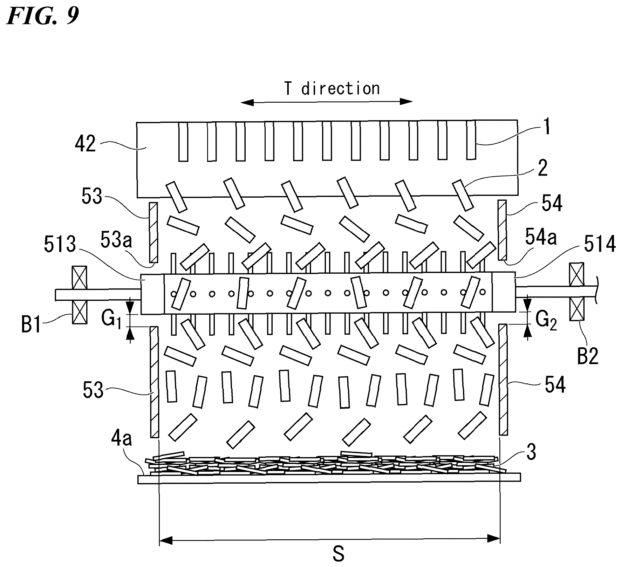

As shown in FIG. 9, in one example, the side cover (right) 53 and the side cover (left) 54 may be given a role as a regulator that regulates the width (dimension in the T direction) of the fiber mat 3 formed on the first carrier film 4a. In FIG. 9, the width of the fiber mat 3 deposited on the first carrier film 4a reflects the spacing S between the lower edges of the two side covers 53, 54.

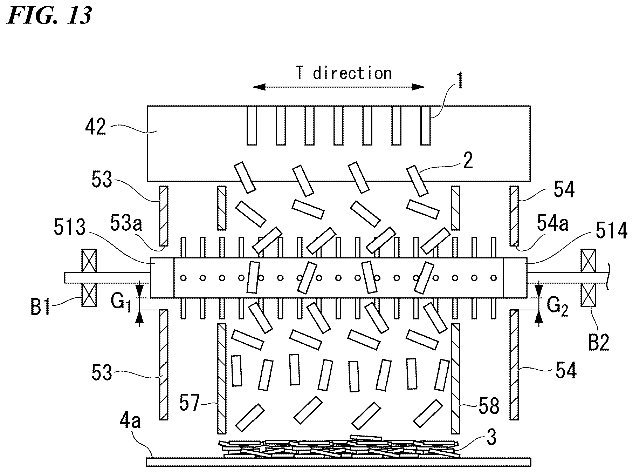

In another example, as shown in FIG. 13, two regulator plates 57, 58 each parallel to the M direction may be disposed between the side cover (right) 53 and the side cover (left) 54. The roll body 510 of the dispersion roll 51 is passed through circular holes respectively formed in the regulator plates 57, 58. The radius of the circular holes is only slightly larger than the maximum radius r_{M} of the roll body 510, allowing almost all of the short fiber bundles 2 to fall through between the two regulator plates 57, 58 onto the first carrier film 4a. The lower edges of the two regulator plates 57, 58 are positioned close enough to the upper surface of the first carrier film 4a to allow the width of the fiber mat formed on the first carrier film 4a to reflect the distance between the two regulator plates 57, 58.

A small portion of the short fiber bundles 2 as well as the fiber dust generated from the short fiber bundles 2 may pass through the circular holes formed in the regulator plates 57, 58, but hardly leak to the outside of the side covers 53, 54.

### 1.3. First Modified Embodiment

In the first modified embodiment, the number of dispersion rolls provided in the dispersion roller device is two or more. Every one of the two or more dispersion rolls is provided with a roll body-adjoining part having a cylindrical circumferential surface, and the cylindrical circumferential surface is configured to face the inner circumferential surface of a circular opening provided in the side cover.

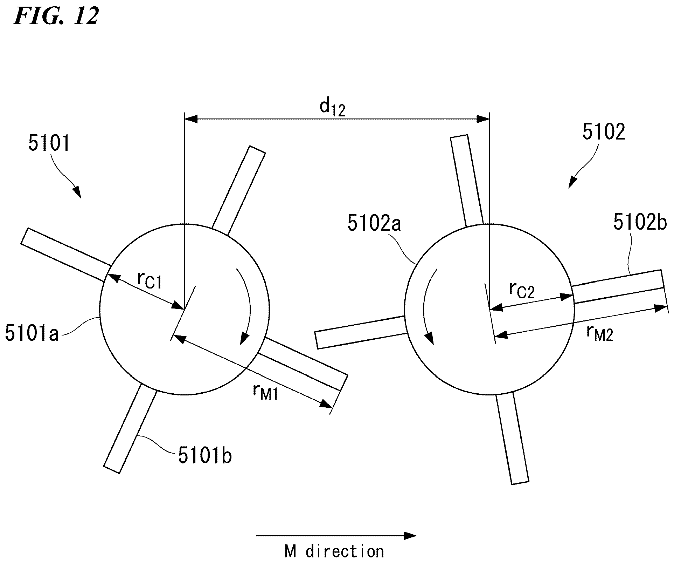

In a preferred example, the dispersion roller device may be provided with two dispersion rolls aligned one behind the other. FIG. 12 shows an example of the positional relationship of the roll bodies when two dispersion rolls (a rear dispersion roll and a front dispersion roll) are arranged in this manner.

In order for more short fiber bundles to be struck by the pins 5101b, 5102b provided on the roll body 5101 of the rear dispersion roll and the roll body 5102 of the front dispersion roll when passing through between these roll bodies, it is preferable that, as shown in FIG. 12, the sum of the maximum radius r_{M1} of the roll body 5101 in the rear dispersion roll and the maximum radius r_{M2} of the roll body 5102 in the front dispersion roll is larger than the distance d₁₂ between the rotating axes of these two dispersion rolls.

The sum of the maximum radius r_{M1} of the roll body of the rear dispersion roll and the cylinder radius r_{C2} of the roll body 5102 of the front dispersion roll, and the sum of the cylinder radius r_{C1} of the roll body 5101 of the rear dispersion roll and the maximum radius r_{M2} of the roll body of the front dispersion roll are both smaller than the distance d₁₂ between the rotational axes of the two dispersion rolls.

The arrangement in FIG. 12 is an example and non-limiting.

The arrangement shown in FIG. 12 may be modified to equalize the sum of the maximum radius r_{M1} of the roll body in the rear dispersion roll and the maximum radius r_{M2} of the roll body in the front dispersion roll with the distance d₁₂ between the rotational axes of the two dispersion rolls.

Further, the sum of the maximum radius r_{M1} of the roll body in the rear dispersion roll and the maximum radius r_{M2} of the roll body in the front dispersion roll may be slightly smaller than the distance d₁₂ between the rotating axes of the two dispersion rolls. However, the difference {d₁₂ - (r_{M1} + r_{M2})} is preferably 10 mm or less, more preferably 5 mm or less.

When two dispersion rolls aligned one behind the other are provided in the dispersion roller device, it is preferable that, as shown in FIG. 12, the rear dispersion roll is rotated such that the pins 5101b of the roll body move downward from above on its side facing the front dispersion roll, and the front dispersion roll is rotated such that the pins 5102b of the roll body move downward from above on its side facing the rear dispersion roll.

### 1.4. Second Modified Embodiment

In the second modified embodiment, the roll body of the dispersion roll in the dispersion roller device is altered from pin roll type to cage roll type.

A cage roll type roll body has a structure in which a plurality of rods extending in the direction of the rotation axis are arranged at equal intervals on a cylinder surface centered on the rotation axis. The rods move in the circumferential direction when the dispersion roll is rotated, which allows the short fiber bundles to be struck by the side surfaces of the rods. Taut wires may be used instead of the rods.

The material of the rods is preferably a metal. The cross-sectional shape of the rods is not limited, and may be circular, oval, square, rectangular, hexagonal, or any of various other shapes.

The cage roll type roll body may have a superimposed structure formed by combination of the above-mentioned structure, that is, a structure in which a plurality of rods extending in the direction of the rotation axis are arranged at equal intervals on each of two or more concentric cylinder surfaces having mutually different radii.

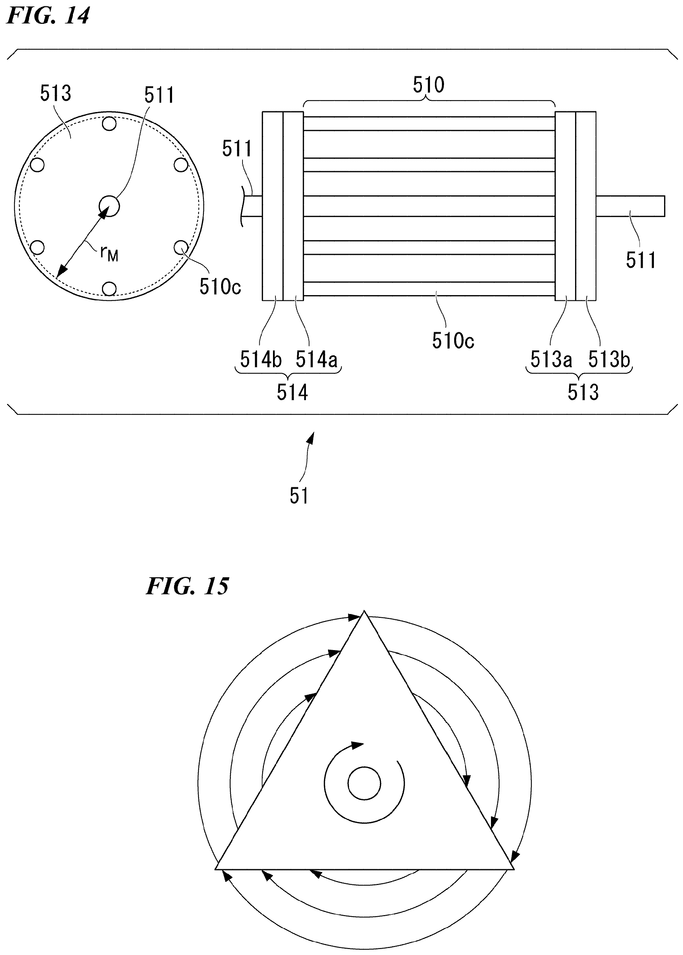

FIG. 14 shows an example of a dispersion roll having a cage roll type roll body, which the dispersion roller device may have in the second modified embodiment.

Referring to FIG. 14, the dispersion roll 51 has a roll body 510, a roll body-adjoining part (right) 513 and a roll body-adjoining part (left) 514 which respectively adjoin one end (right end) and the other end (left end) of the roll body 510 in its axial direction, and a shaft 511 penetrating through the roll body and the right and left roll body-adjoining parts in their axial directions.

The roll body 510 comprises six round bars 510c spanned between a support member 513a included in the roll body-adjoining part (right) 513 and a support member 514a included in the roll body-adjoining part (left) 514. Since the six round bars 510c are arranged at equal intervals on a cylindrical surface centered on the central axis of the shaft 511, the roll body 510 has 6-fold rotational symmetry.

The diameter of the round bars 510c is, for example, 3 mm or less, may be 1.5 mm or less, and may be 1 mm or more.

The maximum radius r_{M} of the roll body 510, that is, a radius of a cylinder whose central axis coincides with the rotation axis of the roll body 510 and which circumscribes the roll body 510 (a cylinder circumscribing the six round bars 510c) may be, for example, in the range of 100 mm or more and 200 mm or less, but is not limited thereto.

The roll body-adjoining part (right) 513 comprises a support member 513a and a disk 513b, and the roll body-adjoining part (left) 514 comprises a support member 514a and a disk 514b. When the dispersion roll 51 is built into the dispersion roller device, the cylindrical circumferential surface of the disk 513b faces the inner circumferential surface of the circular opening (right) provided in the side cover (right), and the cylindrical circumferential surface of the disk 514b faces the inner peripheral surface of the circular opening (left) provided in the side cover (left).

The radius of the cylindrical circumferential surface of the disk 513b, 514b is preferably equal to or larger than the maximum radius r_{M} of the roll body 510.

The diameter of the cylindrical circumferential surface of the disk 513b, 514b may be significantly smaller than the diameter of the support member 513a, 514a, which, however, may pose a disadvantage that the gap formed between the support member 513a, 514a and the side cover 53, 54 is easily contaminated with fiber dust, and is not easily cleanable.

In one example, the support member 513a, 514a may also serve as the disk 513b, 514b. That is, when the dispersion roll 51 is built into the dispersion roller device, the inner circumferential surface of the circular opening (right) provided in the side cover (right) faces the cylindrical circumferential surface of the support member 513a, and the inner circumferential surface of the circular opening (left) provided in the side cover (left) faces the cylindrical circumferential surface of the support member 514a.

When the roll body 510 is of a cage roll type, the horizontal distance from each of the side covers 53, 54 to the roll body 510 may be 60 mm or less, 50 mm or less, 40 mm or less, 30 mm or less, 20 mm or less, or 10 mm or less.

### 1.5. Other Embodiments

The roll body of the dispersion roll in the dispersion roller device is not limited to the pin roll type or the cage roll type, as long as it has n-fold rotational symmetry around its rotation axis, with the proviso that the n is a finite integer of 1 or more. The n is preferably 2 or more and 72 or less, or may be 3 or more, and may be 36 or less or 24 or less.

For example, the roll body may be a triangular prism whose cross section perpendicular to the rotation axis is an equilateral triangle, or may have a shape in which such a triangular prism is twisted about the rotation axis. These are examples of the roll body having 3-fold rotational symmetry around its rotation axis.

As shown in FIG. 15, when such a roll body is rotated, all of its three side surfaces move in the circumferential direction except for the position at which the direction of the normal coincides with the radial direction of the roll body.

The maximum radius of the roll body is defined as the radius of a cylinder of which centerline is the rotation axis of the roll body and which circumscribes the roll body, regardless of the structure of the roll body.

The radii of the cylindrical circumferential surfaces of the roll body-adjoining parts individually adjoining one end and the other end of the roll body in its axial direction may preferably be equal to or larger than the maximum radius of the roll body 510.

### 2. Method of Manufacturing Sheet Molding Compound

The procedure for manufacturing SMC using the SMC manufacturing apparatus 10 is explained as follows.

First, a continuous fiber bundle 1 is drawn out from a fiber package prepared in advance. The continuous fiber bundle 1 may be drawn out from a bobbin package on a creel by unwinding from outside, or may be drawn out from a package from which a bobbin has been pulled out by unwinding from inside.

The continuous fiber bundle 1 preferably, but not exclusively, comprises carbon fiber, and may be one which is formed of fiber other than carbon fiber, such as glass fiber and aramid fiber.

When the continuous fiber bundle 1 is a carbon fiber bundle, the filament number per bundle may be, but is not limited to, 3,000 to 100,000, for example. The continuous fiber bundle may be partially split into a plurality of sub-bundles in advance.

A plurality of continuous fiber bundles 1 are aligned parallel to each other, and then supplied to a chopper 40 from a direction perpendicular to the T direction to be cut into short fiber bundles 2.

When manufacturing CF-SMC, the fiber length of the short fiber bundles 2 is, for example, 5 mm to 100 mm, preferably 10 mm to 60 mm, more preferably 10 mm to 30 mm, and typically 0.5 inch (about 1.3 cm), 1 inch (about 2.5 cm), 2 inches (about 5.1 cm), etc., but is not limited thereto.

In a modified example, instead of using the chopper 40 to produce short fiber bundles 2 from continuous fiber bundles 1 on the spot, a hopper or the like may be used in order for short fiber bundles 2 prepared beforehand in a separate process to fall from above onto the dispersion roller device 50.

The short fiber bundles 2 fall onto the first carrier film 4a while being dispersed by the dispersion roller device 50 to form a fiber mat 3.

When manufacturing CF-SMC, the operating condition of the dispersion roller device 50 (rotation speed of the dispersion roll 51) may preferably be set so that a fiber bundle with filament number of 500 or less and a single filament are not generated, or even when they are generated, the amount thereof in the fiber mat 3 is suppressed to less than 1 % by weight.

Even when manufacturing CF-SMC, in an instance where the continuous fiber bundle 1 is a carbon fiber bundle that has been partially split into a plurality of sub-bundles in advance, and the filament number of each sub-bundle is less than 2K, the operating condition of the dispersion roller device 50 may preferably be set so that generation of fiber bundles with filament number of 0.2K or less is prevented as much as possible, and, even if generated, the amount of such fiber bundles in the fiber mat 3 is suppressed to less than 1 % by weight.

Further, when manufacturing CF-SMC, it is desirable to determine the operating condition of the dispersion roller device 50 also in consideration of ensuring that the areal weight of the fiber mat 3 does not become significantly non-uniform due to the airflow generated by the rotation of the dispersion roller 51.

In an embodiment in which the dispersion roller device 50 has two pin roll type dispersion rolls arranged side by side with their rotational axes parallel to each other, when each dispersion roll is, as shown in FIG. 12, rotationally driven such that its pins move downward from above on its side facing the other dispersion roll, it is difficult for the fiber mat 3 to have a front side and a back side even if the short fiber bundles 2 have a weight distribution.

The reason is that both the heavy short fiber bundles and the light short fiber bundles fall onto the first carrier film through the gap between the roll bodies of the two dispersion rolls. In other words, the position at which the heavy short fiber bundles fall and the position at which the light short fiber bundle fall are less likely to shift along the travelling direction of the first carrier film.

Before depositing the fiber mat 3, a first resin paste 5a is applied to the first carrier film 4a using a first applicator 20.

The first resin paste 5a is a thermosetting resin composition, and examples of its base resins include, but are not limited to, a vinyl ester resin (also referred to as an epoxy acrylate resin), an unsaturated polyester resin, an epoxy resin, a polyimide resin, a maleimide resin and a phenolic resin. A mixed resin of a vinyl ester resin and an unsaturated polyester resin may also be used as the base resin. A curing agent, a polymerization inhibitor, a thickener, a reactive diluent, a low shrinkage agent, a flame retardant, an antibacterial agent, etc. are blended into the first resin paste 5a as necessary.

In a separate process, a second resin paste 5b having the same composition as the first resin paste 5a is applied to a second carrier film 4b using a second applicator 30.

The second carrier film 4b with its surface coated with the second resin paste 5b facing downward is superposed on the first carrier film 4a having the fiber mat 3 placed on its upper surface, and the resulting stack 7 is pressurized with an impregnator 60 to impregnate the fiber mat 3 with the thermosetting resin composition, thereby forming a resin-impregnated fiber mat.

The resin-impregnated fiber mat is wound onto a bobbin while remaining sandwiched between the first carrier film 4a and the second carrier film 4b. A sheet molding compound is completed after the process of thickening the resin-impregnated fiber mat.

Sheet molding compounds are used for molding FRP (fiber reinforced plastic) products using, for example, a compression molding method. In particular, the applications of CFRP products that can be manufactured using CF-SMC are wide-ranging, and include parts used in aircraft, unmanned aircraft, automobiles, ships, and various other transportation equipment, as well as sporting goods and leisure goods.

The present invention is described above with reference to specific embodiments. However, each embodiment is presented as an example, and does not limit the scope of the present invention. Each embodiment described in the present specification can be modified in various ways within the scope of the appended claims.

### [Reference Signs List]

1: Continuous fiber bundle
2: Short fiber bundles
3: Fiber mat
4a: First carrier film
4b: Second carrier film
5a: First resin paste
5b: Second resin paste
6a: First resin paste layer
6b: Second resin paste layer
7: Stack
10: SMC manufacturing apparatus
20: First applicator
30: Second applicator
40: Chopper
50: Dispersion roller device
51: Dispersion roll
510: Roll body
511: Shaft
513, 514: Roll body-adjoining part
53, 54: Side cover
531: Cover main body
532: Ring
55: Front cover
56: Rear cover
60: Impregnator
70: Laminator

## Claims

1. A dispersion roller device (50) used for dispersing short fiber bundles (2) allowed to fall onto a carrier film (4a)
in production of a sheet molding compound, comprising a rotational drive dispersion roll, (51) two bearings supporting the dispersion roll, a first side cover, (53) and a second side cover (54), wherein: the first side cover and the second side cover are disposed between the two bearings; the dispersion roll comprises a roll body (510), a first roll body-adjoining part (513), and a second roll body-adjoining part (514), wherein the roll body has n-fold rotational symmetry around its rotation axis, with the proviso that the n is a finite integer of 1 or more, and the first roll body-adjoining part and the second roll body-adjoining part respectively adjoin one end and the other end of the roll body in its axial direction; and an inner circumferential surface of a circular opening provided in the first side cover and a cylindrical circumferential surface of the first roll body-adjoining part face each other, while an inner circumferential surface of a circular opening provided in the second side cover and a cylindrical circumferential surface of the second roll body-adjoining part face each other.

2. The device according to claim 1, wherein the roll body is of a cage roll type, and has a plurality of rods or wires spanned between a support member contained in the first roll body-adjoining part and a support member contained in the second roll body-adjoining part.

3. The device according to claim 1 or 2, wherein the inner circumferential surface of the circular opening provided in each of the first side cover and the second side cover is made of a resin, and the cylindrical circumferential surface of each of the first roll body-adjoining part and the second roll body-adjoining part is made of a metal.

4. The device according to claim 1 or 2, wherein the inner circumferential surface of the circular opening provided in each of the first side cover and the second side cover is made of a metal, and the cylindrical circumferential surface of each of the first roll body-adjoining part and the second roll body-adjoining part is made of a resin.

5. The device according to any of claims 1 to 4, which satisfies at least one of conditions (A) and (B) below:
(A) the first side cover comprises a first cover main body and a first ring fixed to the first cover main body, and a hole of the first ring corresponds to the circular opening provided in the first side cover; and
(B) the second side cover comprises a second cover main body and a second ring fixed to the second cover main body, and a hole of the second ring corresponds to the circular opening provided in the second side cover.

6. The device according to claim 5, wherein when the condition (A) is satisfied, a position of the first ring fixed to the first cover main body is variable within a plane perpendicular to the rotation axis of the dispersion roll, while when the condition (B) is satisfied, a position of the second ring fixed to the second cover main body is variable within a plane perpendicular to the rotation axis of the dispersion roll.

7. The device according to any of claims 1 to 6, wherein a pair of regulator plates are disposed between the first side cover and the second side cover in parallel to the travelling direction of the carrier film, and the roll body of the dispersion roll is passed through both an opening in one of the pair of regulator plates and an opening in the other one of the pair of regulator plates.

8. Use of the device of any of claims 1 to 7 in a sheet molding compound manufacturing apparatus.

9. The use according to claim 8, wherein the sheet molding compound manufacturing apparatus comprises two applicators, a laminator and an impregnator.

10. The use according to claim 9, wherein the sheet molding compound manufacturing apparatus further comprises a chopper.

11. A sheet molding compound manufacturing apparatus comprising the device of any of claims 1 to 7.

12. The sheet molding compound manufacturing apparatus according to claim 11, which further comprises two applicators, a laminator and an impregnator.

13. The sheet molding compound manufacturing apparatus according to claim 12, which further comprises a chopper.

14. A method of manufacturing a sheet molding compound, comprising using the sheet molding compound manufacturing apparatus of any of claims 11 to 13.

15. The method of manufacturing according to claim 14, which is a method of manufacturing a CF-SMC.

## Patentansprüche

1. Dispersionsrollenvorrichtung (50) zum Verteilen von Kurzfaserbündeln (2), die bei einer Herstellung einer Bahnenformmasse auf eine Trägerfolie (4a) fallen kann, umfassend eine Dispersionsrolle mit Rotationsantrieb (51), zwei Lager, die die Dispersionsrolle stützen, eine erste Seitenabdeckung (53) und eine zweite Seitenabdeckung (54), wobei: die erste Seitenabdeckung und die zweite Seitenabdeckung zwischen den beiden Lagern angeordnet sind; die Dispersionsrolle einen Rollenkörper (510), einen ersten an den Rollenkörper angrenzenden Teil (513) und einen zweiten an den Rollenkörper angrenzenden Teil (514) umfasst, wobei der Rollenkörper eine n-zählige Rotationssymmetrie um seine Rotationsachse aufweist, mit der Maßgabe, dass n eine endliche ganze Zahl von 1 oder mehr ist, und der erste an den Rollenkörper angrenzende Teil und der zweite an den Rollenkörper angrenzende Teil jeweils an ein Ende und das andere Ende des Rollenkörper s in seiner axialen Richtung angrenzen; und eine innere Umfangsfläche einer kreisförmigen Öffnung, die in der ersten Seitenabdeckung vorgesehen ist, und eine zylindrische Umfangsfläche des ersten an den Rollenkörper angrenzenden Teils einander zugewandt sind, während eine innere Umfangsfläche einer kreisförmigen Öffnung, die in der zweiten Seitenabdeckung vorgesehen ist, und eine zylindrische Umfangsfläche des zweiten an den Rollenkörper angrenzenden Teils einander zugewandt sind.

2. Vorrichtung nach Anspruch 1, wobei der Rollenkörper vom Käfigrollenentyp ist, und eine Vielzahl von Stäben oder Drähten aufweist, die zwischen einem im ersten an den Rollenkörper angrenzenden Teil enthaltenen Stützelement und einem im zweiten an den Rollenkörper angrenzenden Teil enthaltenen Stützelement gespannt sind.

3. Vorrichtung nach Anspruch 1 oder 2, wobei die innere Umfangsfläche der kreisförmigen Öffnung, die in jeder der ersten Seitenabdeckung und der zweiten Seitenabdeckung vorgesehen ist, aus einem Harz hergestellt ist, und die zylindrische Umfangsfläche des ersten an den Rollenkörper angrenzenden Teils und des zweiten an den Rollenkörper angrenzenden Teils aus einem Metall hergestellt ist.

4. Vorrichtung nach Anspruch 1 oder 2, wobei die innere Umfangsfläche der kreisförmigen Öffnung, die in jeder der ersten Seitenabdeckung und der zweiten Seitenabdeckung vorgesehen ist, aus Metall hergestellt ist, und die zylindrische Umfangsfläche des ersten an den Rollenkörper angrenzenden Teils und des zweiten an den Rollenkörper angrenzenden Teils aus Harz hergestellt ist.

5. Vorrichtung nach einem der Ansprüche 1 bis 4, das mindestens eine der folgenden Bedingungen (A) und (B) erfüllt:
(A) die erste Seitenabdeckung umfasst einen Abdeckungshauptkörper und einen ersten Ring, der an dem Abdeckungshauptkörper befestigt ist, und ein Loch des ersten Rings entspricht der kreisförmigen Öffnung, die in der ersten Seitenabdeckung vorgesehen ist; und
(B) die zweite Seitenabdeckung umfasst einen Abdeckungshauptkörper und einen zweiten Ring, der an dem Abdeckungshauptkörper befestigt ist, und ein Loch des zweiten Rings entspricht der kreisförmigen Öffnung, die in der zweiten Seitenabdeckung vorgesehen ist.

6. Vorrichtung nach Anspruch 5, wobei, wenn die Bedingung (A) erfüllt ist, eine Position des ersten Rings, der am ersten Abdeckungshauptkörper befestigt ist, innerhalb einer Ebene senkrecht zur Rotationsachse der Dispersionsrolle variabel ist, während, wenn die Bedingung (B) erfüllt ist, eine Position des zweiten Rings, der am zweiten Abdeckungshauptkörper befestigt ist, innerhalb einer Ebene senkrecht zur Rotationsachse der Dispersionsrolle variabel ist.

7. Vorrichtung nach einem der Ansprüche 1 bis 6, wobei ein Paar Reglerplatten zwischen der ersten Seitenabdeckung und der zweiten Seitenabdeckung parallel zur Laufrichtung der Trägerfolie angeordnet ist, und der Rollenkörper der Dispersionsrolle sowohl durch eine Öffnung in einer des Paares von Reglerplatten als auch durch eine Öffnung in der anderen des Paares von Reglerplatten geführt wird.

8. Verwendung der Vorrichtung nach einem der Ansprüche 1 bis 7 in einer Einrichtung zur Herstellung einer Bahnenformmasse.

9. Verwendung nach Anspruch 8, wobei die Einrichtung zur Herstellung einer Bahnenformmasse zwei Applikatoren, einen Laminator und einen Imprägnierer umfasst.

10. Verwendung nach Anspruch 9, wobei die Einrichtung zur Herstellung einer Bahnenformmasse weiter einen Zerhacker umfasst.

11. Einrichtung zur Herstellung einer Bahnenformmasse, die die Vorrichtung nach einem der Ansprüche 1 bis 7 umfasst.

12. Einrichtung zur Herstellung einer Bahnenformmasse nach Anspruch 11, welches weiter zwei Applikatoren, einen Laminator und einen Imprägnierer umfasst.

13. Einrichtung zur Herstellung einer Bahnenformmasse nach Anspruch 12, welches weiter einen Zerhacker umfasst.

14. Verfahren zur Herstellung einer Bahnenformmasse, umfassend eine Verwendung der Einrichtung zur Herstellung einer Bahnenformmasse nach einem der Ansprüche 11 bis 13.

15. Verfahren zur Herstellung nach Anspruch 14, welches ein Verfahren zur Herstellung eines CF-SMC ist.

## Revendications

1. Dispositif (50) à rouleau de dispersion utilisé pour disperser des faisceaux (2) de fibres courtes autorisés à tomber sur un film porteur (4a) lors de la production d'un composé à mouler en feuille, comprenant un rouleau de dispersion (51) à entraînement rotatif, deux paliers supportant le rouleau de dispersion, un premier couvercle latéral (53) et un second couvercle latéral (54),
dans lequel : le premier couvercle latéral et le second couvercle latéral sont disposés entre les deux paliers ; le rouleau de dispersion comprend un corps (510) de rouleau, une première partie (513) attenante de corps de rouleau et une seconde partie (514) attenante de corps de rouleau, dans lequel le corps de rouleau présente une symétrie en rotation n fois autour de son axe de rotation, à condition que le n soit un nombre entier fini de 1 ou plus, et que la première partie attenante de corps de rouleau et la seconde partie attenante de corps de rouleau soient respectivement attenantes à une extrémité et à l'autre extrémité du corps de rouleau dans sa direction axiale ; et une surface circonférentielle interne d'une ouverture circulaire située dans le premier couvercle latéral et une surface circonférentielle cylindrique de la première partie attenante de corps de rouleau se font mutuellement face, tandis qu'une surface circonférentielle interne d'une ouverture circulaire située dans le second couvercle latéral et une surface circonférentielle cylindrique de la seconde partie attenante de corps de rouleau se font mutuellement face.

2. Dispositif selon la revendication 1, dans lequel le corps de rouleau est d'un type rouleau à cage, et présente une pluralité de tiges ou fils s'étendant entre un élément de support contenu dans la première partie attenante de corps de rouleau et un élément de support contenu dans la seconde partie attenante de corps de rouleau.

3. Dispositif selon la revendication 1 ou revendication 2, dans lequel la surface circonférentielle interne de l'ouverture circulaire située dans chacun du premier couvercle latéral et du second couvercle latéral est composée d'une résine, et la surface circonférentielle cylindrique de chacune de la première partie attenante de corps de rouleau et de la seconde partie attenante de corps de rouleau est composée d'un métal.

4. Dispositif selon la revendication 1 ou 2, dans lequel la surface circonférentielle interne de l'ouverture circulaire située dans chacun du premier couvercle latéral et du second couvercle latéral est composée d'un métal, et la surface circonférentielle cylindrique de chacune de la première partie attenante de corps de rouleau et de la seconde partie attenante de corps de rouleau est composée d'une résine.

5. Dispositif selon l'une quelconque des revendications 1 à 4, qui satisfait au moins une des conditions (A) et (B) ci-dessous :
(A) le premier couvercle latéral comprend un premier corps principal de couvercle et une première bague fixée au premier corps principal de couvercle, et un trou de la première bague correspond à l'ouverture circulaire située dans le premier couvercle latéral ; et
(B) le second couvercle latéral comprend un second corps principal de couvercle et une seconde bague fixée au second corps principal de couvercle, et un trou de la seconde bague correspond à l'ouverture circulaire située dans le second couvercle latéral.

6. Dispositif selon la revendication 5, dans lequel, lorsque la condition (A) est satisfaite, une position de la première bague fixée au premier corps principal de couvercle est variable dans un plan perpendiculaire à l'axe de rotation du rouleau de dispersion, tandis que, lorsque la condition (B) est satisfaite, une position de la seconde bague fixée au second corps principal de couvercle est variable dans un plan perpendiculaire à l'axe de rotation du rouleau de dispersion.

7. Dispositif selon l'une quelconque des revendications 1 à 6, dans lequel une paire de plaques de régulation sont disposées entre le premier couvercle latéral et le second couvercle latéral parallèlement à la direction de déplacement du film porteur, et le corps de rouleau du rouleau de dispersion traverse à la fois une ouverture dans l'une de la paire de plaques de régulation et une ouverture dans l'autre de la paire de plaques de régulation.

8. Utilisation du dispositif selon l'une quelconque des revendications 1 à 7 dans un appareil de fabrication de composé à mouler en feuille.

9. Utilisation selon la revendication 8, dans laquelle l'appareil de fabrication de composé à mouler en feuille comprend deux applicateurs, un dispositif de stratification et un dispositif d'imprégnation.

10. Utilisation selon la revendication 9, dans laquelle l'appareil de fabrication de composé à mouler en feuille comprend en outre un hachoir.

11. Appareil de fabrication de composé à mouler en feuille comprenant le dispositif selon l'une quelconque des revendications 1 à 7.

12. Appareil de fabrication de composé à mouler en feuille selon la revendication 11, qui comprend en outre deux applicateurs, un dispositif de stratification et un dispositif d'imprégnation.

13. Appareil de fabrication de composé à mouler en feuille selon la revendication 12, qui comprend en outre un hachoir.

14. Procédé de fabrication un composé à mouler en feuille, comprenant l'utilisation de l'appareil de fabrication de composé à mouler en feuille selon l'une quelconque des revendications 11 à 13.

15. Procédé de fabrication selon la revendication 14, qui est un procédé de fabrication d'un CF-SMC.
